(19) Europäisches Patentamt
European Patent Office
Office européen des brevets

(11) Numéro de publication: **0 189 725**
**B1**

(12) # FASCICULE DE BREVET EUROPÉEN

(45) Date de publication du fascicule du brevet: **08.03.89**

(51) Int. Cl.⁴: **C 07 F 9/40**

(21) Numéro de dépôt: **85420242.1**

(22) Date de dépôt: **24.12.85**

(54) **Préparation d'intermédiaires phosphorés pour usages herbicides.**

(30) Priorité: **26.12.84 FR 8420151**

(43) Date de publication de la demande: **06.08.86 Bulletin 86/32**

(45) Mention de la délivrance du brevet: **08.03.89 Bulletin 89/10**

(84) Etats contractants désignés: **AT BE CH DE FR GB IT LI LU NL SE**

(56) Documents cité: **EP-A-0 039 310**

(73) Titulaire: **RHONE- POULENC AGROCHIMIE, 14- 20, rue Pierre Baizet, F-69009 Lyon (FR)**

(72) Inventeur: **Bres, Hervé Immeubles La Clairière, 42 Rue Commandant Charcot, F-69005 Lyon (FR)**
Inventeur: **Veracini, Serge, 36 Rue de Ménival, F-69005 Lyon (FR)**

(74) Mandataire: **Brachotte, Charles, RHONE- POULENC AGROCHIMIE 14- 20, Rue Pierre Baizet B.P. 9163, F-69263 Lyon Cedex 09 (FR)**

**EP 0 189 725 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1989

## Description

La présente invention concerne un procédé de préparation de dérivés de N-sulfonyl N-(phosphonométhylglycyl)amine utilisables soit comme herbicides, soit comme intermédiaires pour la fabrication de produits phosphorés divers, notamment des herbicides.

Plus spécifiquement la présente invention concerne un procédé de préparation de composés de formule:

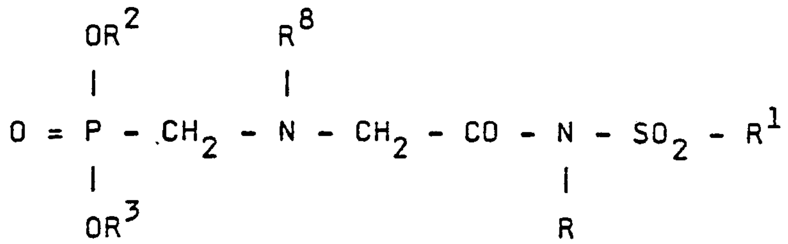

(I)

par réaction de produits de formule:

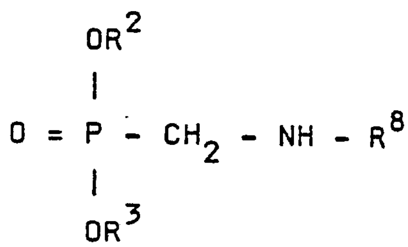

(II)

avec des produits de formule:

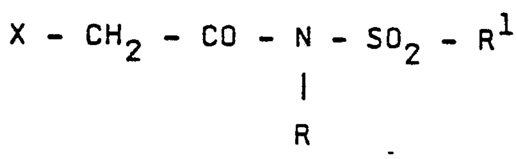

(III)

dans lesquelles

- $R^1$ représente un radical alkyle, aryle ou cycloalkyle, ces divers radicaux pouvant éventuellement être substitués par les atomes d'halogène et les groupes phényle, cyano, alkyle, alkoxyle, carboxylate d'alkyle, dans lesquels les groupes alkyle ont de 1 à 4 atomes de carbone, $R^1$ ayant au plus 18 atomes de carbone, de préférence de 1 à 7 atomes de carbone, et plus spécialement de 3 à 7 atomes de carbone lorsqu'il s'agit d'un groupe cycloalkyle; de préférence il s'agit d'un radical alkyle ayant de 1 à 4 atomes de carbone, éventuellement halogéné, notamment chloré ou fluoré, par exemple $CF_3$,
- R représente l'atome d'hydrogène ou a l'une des significations donnée pour $R^1$, et est de préférence un groupe alkyle de 1 à 4 atomes de carbone,
- $R^2$ et $R^3$ représantant un radical alkyle, aryle, arylalkyle, éventuellement substitués par des substituants tels que ceux indiqués pour $R_1$, ou peuvent constituer ensemble un radical unique divalent, ayant de 2 à 6 atomes de carbone, comme les radicaux alkylène (par exemple un radical éthylène ou propylène) ils ont de 1 à 12 atomes de carbone et de préférence de 1 à 8 atomes de carbone,
- $R^8$ représente un radical de formule $Ar(R^5)(R^6)C$-dans laquelle Ar est un groupe phenyle, et $R^5$ et $R^6$ sont l'atome d'hydrogène ou un radical Ar ou un groupe alkyle ayant au plus 6 atomes de carbone,
- X représente un atome d'halogène tel que le chlore, le brome, l'iode, de préférence le chlore.

Comme substituants du groupe Ar on peut citer les radicaux alkyle, alkoxyle, nitro, les atomes d'halogènes etc...

Par hydrogénation et/ou hydrolyse et/ou salification les produits de formule (I) peuvent donner naissance à des produits de formule:

$$
\begin{array}{l}
\quad\quad OH \\
\quad\quad | \\
O = P - CH_2 - NH - CH_2 - CO - N - SO_2 - R^1 \\
\quad\quad | \quad\quad\quad\quad\quad\quad\quad\quad\quad\quad\quad\quad | \\
\quad\quad OH \quad\quad\quad\quad\quad\quad\quad\quad\quad\quad\quad R \quad\quad\quad (IV)
\end{array}
$$

qui ont des propriétés herbicides.

La réaction selon l'invention peut s'effectuer en absence ou généralement en présence de solvant. Comme solvant on utilise un solvant organique, inerte à chaud; on opère avantageusement en présence d'un accepteur d'acide.

La température de réaction est généralement comprise entre 30 et 150° C, de préférence entre 40 et 120° C.

Les réactifs de formule (II) et (III) sont généralement mis en oeuvre en proportion stoéchiométrique ou ne s'écartant pas de plus de 40 % en nombre de moles par rapport à la stoechiométrie.

Comme solvants utilisables on peut citer les nitriles (notamment l'acétonitrile), les cétones (notamment l'acétone, la cyclohexanone, la méthylethylcétone, la méthylisobutylcétone), les hydrocarbures, halogénés ou non (notamment le benzène, le toluène, les xylènes, le chlorobenzène), les esters tels que les alcanoates d'alkyle (notamment l'acétate d'éthyle), et les solvants polaires aprotiques, tels que le diméthylformamide et la N-méthyl pyrrolidone.

Comme accepteurs d'acides, on préfère les agents basiques, organiques ou minéraux, notamment les hydroxydes ou carbonates alcalins ou alcalino terreux, de préférence les carbonates de sodium ou potassium, ainsi que les amines tertiaires telles que les tris(alkyl)amines, notamment la triéthylamine, tripropylamine, tributylamine, et les N,N-dialkylaniline.

Le produit de réaction peut être isolé par tout moyen connu en soi.

Certains produits de formule (II) sont connus (Tetrahedron letters n° 46 p. 4645, 1973). Il se préparent commodément par réaction de tris(aralkyl)hexahydrotriazines avec des diorganophosphites.

Les réactifs de formule (III) sont aussi connus.

Les exemples suivants donnés à titre non limitatif, illustrent l'invention et montrent comment elle peut être mise en oeuvre.

**Exemple 1:**

Une solution de 2 g (7,78 millimoles) de N-benzylaminométhane phosphonate de diéthyle de formule:

$$
\begin{array}{l}
\quad\quad O - C_2H_5 \\
\quad\quad | \\
O = P - CH_2 - NH - CH_2 - C_6H_5 \quad\quad\quad (V) \\
\quad\quad | \\
\quad\quad O - C_2H_5
\end{array}
$$

dans 10 ml d'acétonitrile est chauffée à l'ébullition à reflux (80° C). On ajoute progressivement en 1/4 h à 80° C une solution dans 10 ml d'acétonitrile de 1,44 g (7,76 millimoles) de N-méthyl N-méthylsulfonyl chloroacétamide de formule:

$$Cl - CH_2 - CO - N(CH_3) - SO_2 - CH_3 \quad\quad (VI)$$

On chauffe 2 h et on ajoute alors 0,54 g (3,9 millimoles) de $K_2CO_3$ et on chauffe encore 8 h à la même température. On refroidit et filtre.

Par chromatographie, on constate qu'on a obtenu 1,9g de produit de formule:

$$O=\overset{\displaystyle O-C_2H_5}{\underset{\displaystyle O-C_2H_5}{P}}-CH_2-\underset{\displaystyle CH_2-C_6H_5}{N}-CH_2-CO-\underset{\displaystyle CH_3}{N}-SO_2-CH_3 \qquad (VII)$$

soit un rendement de 60 % (taux de transformation du produit de formule (V): 85 %)

**Exemple 2:**

Une solution de 1 g (3,89 millimoles) de N-benzylaminométhane phosphonate de diéthyle dans 10 ml de méthylisobutylcétone (MIBK) est chauffée à 80° C. Une solution de 0,721 g (3,89 millimoles) de N-méthyl N-méthylsulfonyl chloroacétamide dans 10 ml de MIBK est ajoutée progressivement à la solution précédente, puis l'on chauffe 2 heures à 115° C; on ajoute 0,268 g de $K_2CO_3$ sec (1,94 millimoles); le chauffage est poursuivi durant 2 heures à cette même température. On refroidit et filtre. Par chromatographie, on constate que l'on a obtenu 0,934 g de produit de formule (VII) (2,3 millimoles) soit un rendement de 59 %. (Taux de transformation du produit de formule (V): 91 %).

**Exemple 3:**

Une solution de 1 g (3,89 millimoles) de N-benzylaminométhane phosphonate de diéthyle dans 10 ml de chlorobenzène est chauffée à 80° C. Une solution de 0,721 g (3,89 millimoles) de N-méthyl N-méthylsulfonyl chloroacétamide dans 10 ml de chlorobenzène est ajoutée progressivement à la solution précédente, puis l'on chauffe 2 heures à 110° C et on ajoute 0,268 g de $K_2CO_3$ sec (1,94 millimoles); le chauffage est poursuivi durant 2 heures à cette même température. On refroidit puis filtre.

Par chromatographie, on constate que l'on a obtenu 0,772 g de produit de formule (VII), soit un rendement de 48,9 %.(Taux de conversion du produit de formule (V): 84,2 %).

**Exemple 4:**

Une solution de 1 g (3,89 millimoles) de N-benzylaminométhane phosphonate de diéthyle dans 10 ml d'acétonitrile est chauffée à 60° C.

Une solution de 0,721 g de N-méthyl N-méthylsulfonyl chloroacétamide dans 10 ml d'acétonitrile est ajoutée progressivement à la solution précédente, puis l'on chauffe 2 heures à 80° C; on ajoute 0,195 g de $KHCO_3$ (1,945 millimoles); le chauffage est poursuivi durant 5 heures à la même température. Le mélange réactionnel est refroidi et filtré. Par chromatographie, on constate que l'on a obtenu 0,804 g de produit de formule (VII) soit un rendement de 50,9 %.

**Exemple 5:**

On mélange 1 g (3,89 millimoles) de N-benzylaminométhane phosphonate de diéthyle et 0,938 g (5,05 millimoles) de N-méthyl N-méthylsulfonyl chloroacétamide et 10 ml d'acétate d'éthyle. On chauffe au reflux (78° C) durant 3 heures puis ajoute 0,32 g de $K_2CO_3$ (2,32 millimoles); le chauffage est poursuivi durant 6 h 30 à cette même température. On refroidit puis filtre. Par chromatographie, on constate que l'on a obtenu 1,139 g de produit de formule (VII) (2,8 millimoles) soit un rendement de 72 %.

**Exemple 6:**

On chauffe 5 h 30 à 85°C un mélange de 0,738 g (2,59 millimoles) de N-benzylaminométhane phosphonate de diisopropyle et 0,938 g de N-méthyl N-méthylsulfonyl chloroacétamide (5,05 millimoles); on ajoute alors 0,16 g de $K_2CO_3$ et on chauffe à nouveau durant 3 heures. On refroidit puis filtre.

Par chromatographie, on constate que l'on a obtenu 0,757 g de produit de formule (VIII) (1,745 millimoles) soit un rendement de 67,4 %. La formule (VIII) est la suivante:

```
(CH3)2CH-O                      CH3
          |                      |
      O = P-CH2-N-CH2-CO-N-SO2-CH3            (VIII)
          |     |
(CH3)2CH-O     CH2-C6H5
```

**Exemple 7:**

On chauffe 2 h à 50°C un mélange de 5,13 g (18 millimoles) de N-benzylaminométhane phosphonate de diisopropyle et 3,33 g de N-méthyl N-méthylsulfonyl chloroacétamide (18 millimoles) et 45 ml d'acétate d'éthyle on ajoute alors 1,49 g de $K_2CO_3$ (10,8 millimoles). Le chauffage est poursuivi durant 8 h à cette même température. On refroidit puis filtre.

Par chromatographie, on constate que l'on a obtenu 2,03 g de produit de formule (VIII) (4,68 millimoles) soit un rendement de 26 %.

**Exemple 8:**

On chauffe 3 h 45 mn à 80°C un mélange de 1,269 g (3,59 millimoles) de N-benzylaminométhane phosphonate de diphényle et 0,938 g de N-méthyl N-méthylsulfonyl chloroacétamide (5,05 millimoles) et 10 ml de toluène; on ajoute alors 0,26 g de $K_2CO_3$ (1,88 millimoles). Le chauffage est poursuivi durant 4 h au cours desquelles on ajoute encore 0,09 g de $K_2CO_3$ (0,65 millimoles). On refroidit puis filtre.

Par chromatographie, on constate que l'on a obtenu 0,946 g de produit de formule (IX) (1,88 millimoles) soit un rendement de 52,4 %, (taux de conversion du phosphonate : 80 %). La formule (IX) est la suivante:

```
        O-C6H5
        |
    O = P - CH2 - N - CH2 - CO - N - SO2 - CH3      (IX)
        |         |              |
        O-C6H5    CH2-C6H5       CH3
```

**Exemple 9:**

On chauffe 6 h à 80°C un mélange de 2,646 g (7,495 millimoles) de N-benzylaminométhane phosphonate de diphényle et 1,57 g (8,46 millimoles) de N-méthyl N-méthylsulfonyl chloroacétamide et 6 ml de N-méthyl pyrrolidone-2 (NMP); on ajoute alors 0,378 g (3,74 millimoles) de triéthylamine. On chauffe encore à 80°C durant 5 h au cours desquelles on ajoute encore 0,378 g de triéthylamine. On refroidit, ajoute 10 ml d'acétonitrile puis filtre.

Par chromatographie, on constate que l'on a obtenu 2,25 g de produit de formule (IX) (4,48 millimoles) soit un rendement de 60 % (taux de conversion du phosphonate: 62 %).

**Exemple 10:**

On charge 0,932 g (2,64 millimoles) de N-benzylaminométhane phosphonate de diphényle, 0,49 g (2,64 millimoles) de N-méthyl N-méthylsulfonyl chloroacétamide (II) et 0,272 g de diisopropylamine dans 2 ml de diméthylformamide (DMF). Après 7 heures de chauffage à 80° C, on rajoute 10 ml d'acétate d'éthyle et le chlorhydrate de diisopropylamine formé est récupéré par filtration.

Par chromatographie, on constate que l'on a obtenu 0,670 g de produit de formule (IX) (1,335 millimoles) soit un rendement de 50,5 %, (taux de conversion du phosphonate: 69 %).

**Exemple 11:**

On chauffe 6 h 45 mn à 80° C un mélange de 3 g (7,87 millimoles) de N-benzylaminométhane phosphonate de dibenzyle et 1,45 g (7,82 millimoles) de N-méthyl N-méthylsulfonyl chloroacétamide et 15 ml d'acétonitrile; en même temps on ajoute progressivement 0,792 g de triéthylamine (7,84 millimoles) en solution dans 5 ml d'acétonitrile.

Par chromatographie, on constate que l'on a obtenu 0,95 g de produit de formule (X), soit un rendement de 22,9 %. La formule (X) est la suivante:

```
C6H5-CH2-O                CH3
         |                 |
     O = P-CH2-N-CH2-CO-N-SO2-CH3          (X)
         |     |
C6H5-CH2-O    CH2-C6H5
```

**Exemple 12:**

On charge 5,5 g (24 millimoles) de N-benzylaminométhane phosphonate de diméthyle, et 4,45 g (24 millimoles) de N-méthyl N-méthylsulfonyl chloroacétamide et 50 ml de chlorobenzène. On chauffe à 125° C 2 h 30, ajoute 3 g (21,7 millimoles) $K_2CO_3$, puis chauffe à nouveau 2 h 30, refroidit et filtre; on a obtenu avec un rendement de 30 %, le produit de formule (XI).

```
        O-CH3
        |
    O = P - CH2 - N - CH2 - CO - N - SO2 - CH3      (XI)
        |         |              |
        O-CH3     CH2-C6H5       CH3
```

**Exemple 13:**

Une solution de 2 g (7,78 millimoles) de N-benzylaminométhane phosphonate de diéthyle dans 10 ml d'acétonitrile est chauffée à 80° C; On ajoute une solution dans 10 ml d'acétonitrile de 1,88 g (10,13 millimoles) de N-méthyl N-méthylsulfonyl chloroacétamide. On chauffe 1 h et on ajoute alors 0,64 g (4,63 millimoles) de $K_2CO_3$ et on poursuit le chauffage durant 8 h 30 mn à la même température. On refroidit et filtre.

Par chromatographie, on constate que l'on a obtenu 2,56 g (6,31 millimoles) de produit de formule (VII) soit un rendement de 81 %, (taux de conversion du produit de formule (V): 81 %).

## Revendications

1. Procédé de préparation de composés de formule:

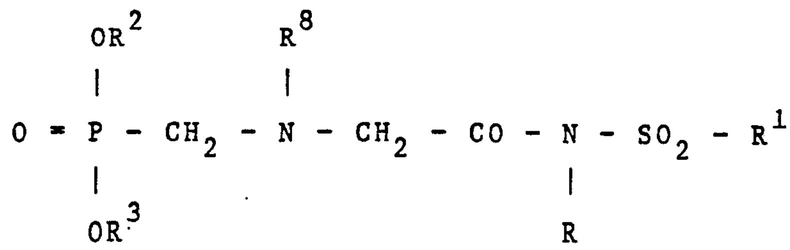 (I)

caractérisé en ce qu'on fait réagir des produits de formule

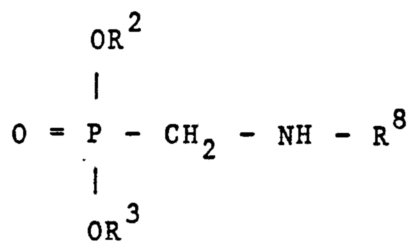 (II)

avec des produits de formule:

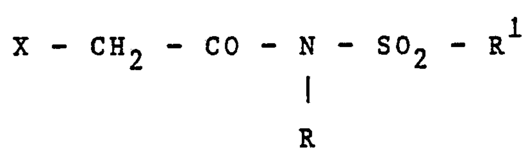 (III)

dans lesquelles

- $R^1$ représente un radical alkyle, aryle ou cycloalkyle, ces divers radicaux pouvant éventuellement être substitués par des atomes d'halogène ou des groupes phényle, cyano, alkyle, alkoxyle, carboxylate d'alkyle, dans lesquels les groupes alkyle ont de 1 à 4 atomes de carbone, $R^1$ ayant au plus 18 atomes de carbone,
- R représente l'atome d'hydrogène ou a l'une des significations donnée pour $R^1$,
- $R^2$ et $R^3$ sont un radical alkyle, aryle, arylalkyle éventuellement substitués, par des substituants tels que ceux indiqués pour $R_1$, ou bien $R^2$ et $R^3$ peuvent constituer ensemble un radical unique divalent de 2 à 6 atomes de carbone, $R^2$ et $R^3$ ayant au plus 12 atomes de carbone,
- $R^8$ représente un radical de formule $Ar(R^5)(R^6)C$- dans laquelle Ar est un groupe phenyle, et $R^5$ et $R^6$ sont l'atome d'hydrogène ou un radical Ar ou un groupe alkyle ayant au plus 6 atomes de carbone,
- X représente un atome d'halogène tel que le chlore, le brome, l'iode.

2. Procédé selon la revendication 1 caractérisé en ce que R et $R^1$ sont des groupes alkyle de 1 à 4 atomes de carbone.

3. Procédé selon l'une des revendications 1 ou 2 caractérisé en ce que $R^1$ et R sont des radicaux méthyle.

4. Procédé selon l'une des revendications 1 à 3 caractérisé en ce que l'on opère entre 30 et 150°C, de préférence entre 40 et 120°C.

5. Procédé selon l'une des revendications 1 à 4 caractérisé en ce que l'on opère avec une proportion de réactifs de formule (II) par rapport au réactif de formule (III) ne s'écartant pas de plus de 40 % de la stoechiométrie.

6. Procédé selon l'une des revendications 1 à 5 caractérisé en ce que l'on opère en présence d'un accepteur d'acide.

7. Procédé selon l'une des revendications 1 à 6 caractérisé en ce que l'accepteur d'acide est une anine tertiaire ou un hydroxyde ou carbonate alcalin ou alcalino-terreux.

8. Procédé selon l'une des revendications 1 à 7 caractérisé en ce que l'on opère en présence d'un solvant.

9. Procédé selon la revendication 8 caractérisé en ce que le solvant est un nitrile ou une cétone ou un ester ou un hydrocarbure halogéné ou non, ou un solvant polaire aprotique.

**Patentansprüche**

1. Verfahren zur Herstellung von Verbindungen der Formel

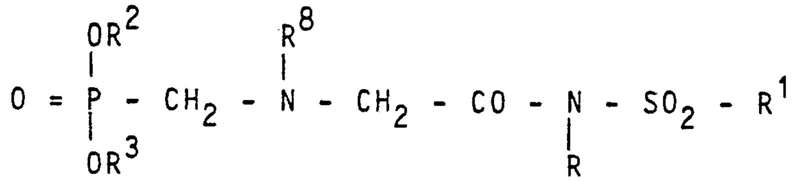

(I)

dadurch gekennzeichnet, daß man Produkte der Formel

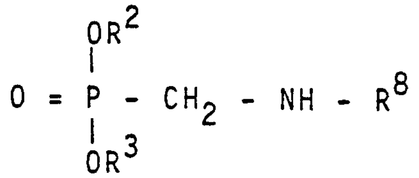

(II)

mit Produkten der Formel

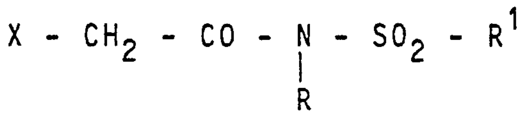

(III)

zur Reaktion bringt,
worin

- $R^1$ bedeutet einen Alkyl-, Aryl- oder Cycloalkylrest, wobei diese verschiedenen Reste gegebenenfalls substituiert sein können durch Halogenatome oder Phenyl-, Cyano-, Alkyl-, Alkoxyl-, Alkylcarboxylatgruppen, wobei die Alkylgruppen 1 bis 4-Kohlenstoffatome haben und $R^1$ höchstens 18 Kohlenstoffatome hat,
- R bedeutet das Wasserstoffatom oder hat eine der für $R^1$ angegebenen Bedeutungen,
- $R^2$ und $R^3$ sind ein Alkyl-, Aryl-, Aralkylrest, die gegebenenfalls substituiert sind durch Substituenten wie diejenigen, die für $R^1$ angegeben sind, oder $R^2$ und $R^3$ können zusammen einen einzigen zweiwertigen Rest mit 2 bis 6 Kohlenstoffatomen darstellen, wobei $R^2$ und $R^3$ höchstens 12 Kohlenstoffatome haben,
- $R^8$ bedeutet einen Rest der Formel $Ar(R^5)(R^6)C$-, worin Ar eine Phenylgruppe ist, und $R^5$ und $R^6$ Wasserstoffatome sind oder einen Rest Ar oder eine Alkylgruppe mit höchstens 6 Kohlenstoffatomen darstellen;
- X bedeutet ein Halogenatom wie Chlor, Brom, Jod.

2. Verfahren gemäß Anspruch 1, dadurch gekennzeichnet, daß R und $R^1$ Alkylgruppen mit 1 bis 4 Kohlenstoffatomen darstellen.

3. Verfahren gemäß einem der Ansprüche 1 oder 2, dadurch gekennzeichnet, daß $R^1$ und R Methylreste sind.

4. Verfahren gemäß einem der Ansprüche 1 bis 3, dadurch gekennzeichnet, daß man zwischen 30 und 150°C, vorzugsweise zwischen 40 und 120°C,arbeitet.

5. Verfahren gemäß einem der Ansprüche 1 bis 4, dadurch gekennzeichnet, daß man mit einem Mengenverhältnis der Reaktanten der Formel (II) in Bezug auf den Reaktanten der Formel (III) arbeitet, das nicht mehr als 40 % von der Stöchiometrie abweicht.

6. Verfahren gemäß einem der Ansprüche 1 bis 5, dadurch gekennzeichnet, daß man in Gegenwart eines Säureakzeptors arbeitet.

7. Verfahren gemäß einem der Ansprüche 1 bis 6, dadurch gekennzeichnet, daß der Säureakzeptor ein tertiäres Amin oder ein Alkali- oder Erdalkalihydroxid oder -carbonat ist.

8. Verfahren gemäß einem der Ansprüche 1 bis 7, dadurch gekennzeichnet, daß man in Gegenwart eines Lösungsmittels arbeitet.

9. Verfahren gemäß Anspruch 8, dadurch gekennzeichnet, daß das Lösungsmittel ein Nitril oder ein Keton

oder ein Ester oder ein gegebenenfalls halogenierter Kohlenwasserstoff oder ein aprotisches polares Lösungsmittel ist.

**Claims**

1. A process for preparing compounds of formula:

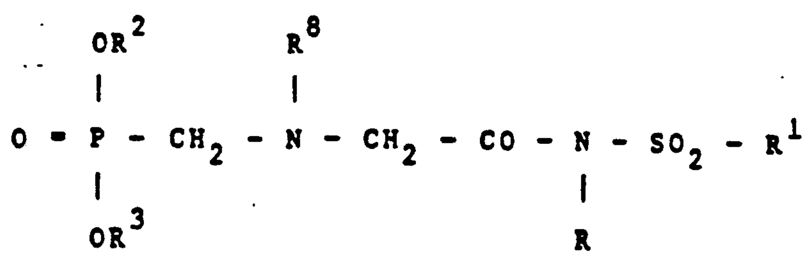

(I)

wherein products of formula

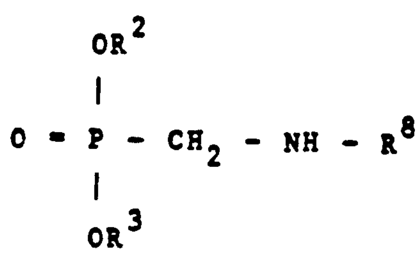

(II)

are reacted with products of formula:

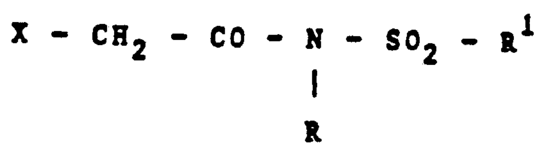

(III)

in which formulae

- $R^1$ denotes an alkyl, aryl or cycloalkyl radical, these various radicals optionally being able to be substituted with halogen atoms or phenyl, cyano, alkyl, alkoxyl or alkyl carboxylate groups, in which groups the alkyl groups have from 1 to 4 carbon atoms, $R^1$ having at most 18 carbon atoms,
- R denotes a hydrogen atom or has one of the meanings given for $R^1$,
- $R^2$ and $R^3$ are an alkyl, aryl or arylalkyl radical, which are optionally substituted with substituents such as those given for $R^1$ (sic), or alternatively $R^2$ and $R^3$ can constitute together a single divalent radical having 2 to 6 carbon atoms, $R^2$ and $R^3$ having at most 12 carbon atoms,
- $R^8$ denotes a radical of formula $Ar(R^5)(R^6)C$- in which Ar is a phenyl group, and $R^5$ and $R^6$ are a hydrogen atom or a radical Ar or an alkyl group having at most 6 carbon atoms,
- X denotes a halogen atom such as chlorine, bromine or iodine.

2. The process according to claim 1, wherein R and $R^1$ are alkyl groups having 1 to 4 carbon atoms.

3. The process according to one of claims 1 or 2, wherein $R^1$ and R are methyl radicals.

4. The process according to one of claims 1 to 3, wherein the reaction is performed at between 30 and 150°C, preferably between 40 and 120°C.

5. The process according to one of claims 1 to 4, wherein the reaction is performed with a proportion of reagents of formula (II) relative to the reagent of formula (III) which does not depart from the stoichiometry by more than 40 %.

6. The process according to one of claims 1 to 5, wherein the reaction is performed in the presence of an acceptor for acid.

7. The process according to one of claims 1 to 6, wherein the acceptor for acid is a tertiary amine or an alkali metal hydroxide or carbonate or alkaline-earth metal hydroxide or carbonate.

8. The process according to one of claims 1 to 7, wherein the reaction is performed in the presence of a solvent.

9. The process according to claim 8, wherein the solvent is a nitrile, a ketone, an ester, a hydrocarbon which is halogenated or not, or an aprotic polar solvent.